# EUROPEAN PATENT APPLICATION

(11) **EP 1 786 195 A1**
(43) Date of publication of application: **16.05.2007**
(21) Application number: 06742205.5
(22) Date of filing: 23.06.2006
(51) Int. Cl.: H04M 15/00

(54) **A CHARGING METHOD IN POC SERVICE**

(30) Priority: 12.07.2005 CN 200510084007
(71) Applicant: Huawei Technologies Co Ltd, Longgang District Shenzhen 518129 (CN)
(72) Inventor: WANG, Zheng Huawei Administration Building, Shenzhen Guangdong 518129 (CN)
(74) Representative: Viering, Jentschura & Partner
(86) International application number: PCT/CN2006/001431
(87) International publication number: WO 2007/006205

(57) **Abstract**

The invention discloses a charging method in PoC service so as to solve the problem that a Push to talk over Cellular (PoC) user's speech priority setting is not limitation and thereby causes the priority policy loses its speech scheduling capability in the prior art. The method disclosed in the present invention includes the following processes: after a speech of a user is completed, the PoC server logs charging information and a speech priority of the user, and uploads the charging information and the speech priority to a charging system; the charging system charges the user in accordance with the charging information and a charging rate corresponding to the speech priority.

## Description

### Field of the Invention

The invention relates to radio communication field, especially to a charging method in PoC service.

### Background of the Invention

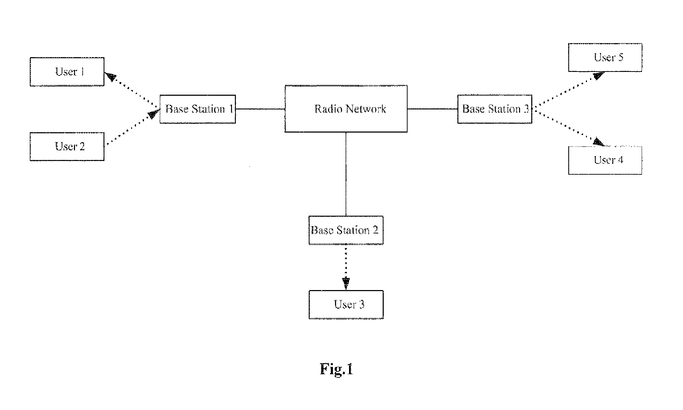

Push to talk over Cellular (PoC) is a service that utilizes mobile terminals and mobile network to implement a function similar to interphones; it may implement 1-to-1 or 1-to-N communication. For example, a speaker can press down a certain key on a mobile terminal to talk with a receiving party; or, as shown in Fig.1, the speaker can broadcast voice information to a group. Since PoC service is delivered in half duplex mode, only one speaker is permitted at a time, while one or more other persons listen to the speech.

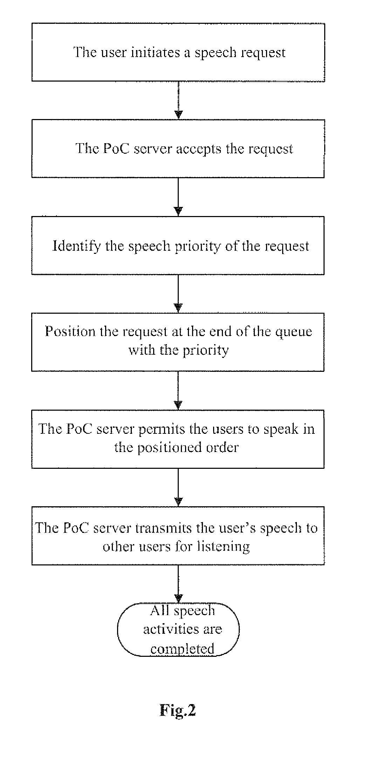

Due to the half-duplex nature of PoC, there is an issue of speech sequence when the PoC users have a group talk. In view of that issue, a concept of speech priority is introduced in PoC service, i.e., the PoC user may set his/her speech priority in a PoC session before the session starts and during the session. A PoC control system sorts the speech requests from different users according to the speech priorities set by the users and the times the users setting to the same priority initiate the speech requests, and permits the users to speak in sequence according to the sorting result. A user speech flow is shown in Fig.2.

The speech priorities are sorted from top to bottom as follows:

a. Preemption priority: a PoC user with preemption priority may directly preempt the speech status of any PoC user with non-preemption priority.

b. High priority: when the speech status of a PoC user is released or revoked, a user with high priority who has requested for speech may speak.

c. Normal priority: when the speech status of a PoC user is released or revoked and no user with higher priority has requested for speech, a user with normal priority who has requested for speech may speak.

d. Listening priority: users with that priority are only permitted to listen to a speech.

At present, the PoC session service is mainly charged upon the volume of voice streams received by the user in the session, the duration the user has participated in the session, the number of authorized speech and the type of the session, etc.

However, since the speech priority is set by the user, the user usually sets his/her speech priority very high, in order to speak as early as possible; as a result, the priority policy loses its due purpose in PoC service.

### Summary of the Invention

Embodiments of the present invention provide a charging method in Push to talk over Cellular (PoC) service so as to solve the problem that the PoC user's speech priority setting is no limitation and thereby causes the priority policy loses its speech scheduling capability in the

### prior art.

The charging method in PoC service according to the embodiment of the present invention includes:
after a speech of a user in a session, a POC server logs charging information and a speech priority for the user; the PoC server uploads the charging information and the speech priority to a charging system; the charging system charges the user in accordance with the charging information and a charging rate corresponding to the speech priority.

Optionally, the process that the charging system charges the user in accordance with the charging information and a charging rate corresponding to the speech priority includes:
calculating a speech charge for the speech in accordance with the charging information; calculating a priority charge in accordance with the speech charge and the charging rate corresponding to the speech priority; and adding the speech charge and the priority charge, to obtain a charge payable for the speech.

Optionally, the process that the charging system charges the user in accordance with the charging information and a charging rate corresponding to the speech priority includes:
calculating a speech charge for the speech in accordance with the charging information; multiplying the speech charge with the charging rate corresponding to the speech priority, to obtain a charge payable for the speech.

Optionally, the process that the charging system charges the user in accordance with the charging information and a charging rate corresponding to the speech priority includes:
calculating a charge for the speech in accordance with the logged charging information; calculating a priority charge in accordance with the speech priority and the charging rate corresponding to the speech priority; adding the speech charge and the priority charge, to obtain a charge payable for the speech.

Optionally, the speech priority is set by the user. The user sets the speech priority before the session starts, or modifies the speech priority at a non-speech status.

Optionally, the speech priority is set automatically according to a system default value. The system default value is the speech priority set by the user at his/her last speech.

Some embodiments of the present invention have the following benefits: the charging information for each speech is logged in the PoC server, together with the priority information of the speech. When the charge payable is calculated for the user, the logged speech priority is taken account into the charge payable, that is, a charging rate is set for each priority; the higher the priority is, the higher the charging rate is. In this way, the embodiment of the present invention prevents the problem that the user increases his/her speech priority blindly to get the speech chance as early as possible and thereby causes the priority policy loses its practical significance.

### Brief Description of the Drawings

Fig. 1 is a networking diagram of a broadcasting system in the prior art;

Fig.2 is a flowchart of user speech in the prior art;

Fig.3 is a flowchart of the charging method in PoC service according to an embodiment of the present invention;

Fig.4 is a signaling flowchart of the charging method in PoC service according to an embodiment of the present invention.

### Detailed Description of the Embodiments

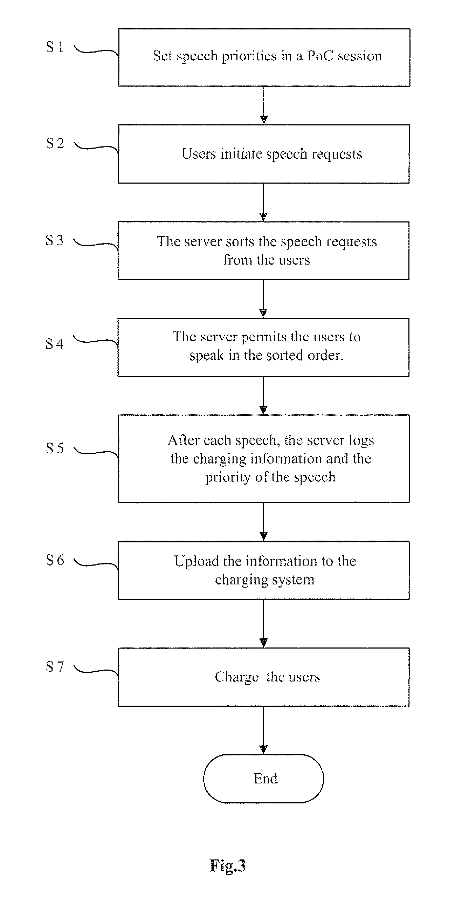

In order to urge a PoC session user to set his/her speech priority appropriately as required, the method according to an embodiment of the present invention calculates the charge payable by the user by logging the priority corresponding to the user's each speech and taking the logged speech priority as one of the factors for charging. A flow chart of the charging method in PoC service according to an embodiment of the present invention is shown in Fig.3; as shown in Fig.3, the method includes the following processes:
- setting the speech priority in a PoC session;
- the users initiating speech requests;
- the PoC server sorting the users' speech requests;
- the PoC server permitting the users to speak in the sorted order;
- after each speech, the PoC server logging the charging information and priority information of the speech;
- uploading the logged information to the charging system;
- calculating the charge payable for each user participating in the session.

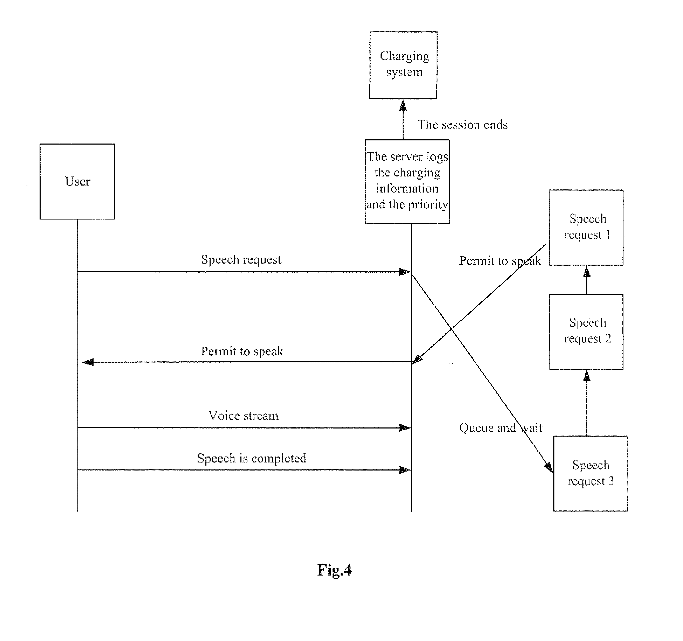

The charging method in PoC service according to an embodiment of the present invention is described in detail as follows, in the processes shown in Fig.3, together with reference to Fig.4.

S 1. A user decides whether to participate in a session in accordance with the session content. If the user decides to participate in the session, the user sets his/her speech priority before he/she initiates the first speech request; and if the user does not set the speech priority actively, the terminal of the user will takes the priority set for the user's last speech as default automatically to configure for the user. For example, suppose there are 4 users participating in the session; the speech priority of user 1 is set to high, that of user 2 is set to high, that of user 3 is set to normal, and that of user 4 is set to listening.

S2. The above 4 users each initiate a speech request carrying his/her speech priority information to the PoC server respectively at the beginning of the session. In addition, user 1 initiates his/her request before user 2 does.

S3. In accordance with the speech priorities and the times the speech requests are initiated, the PoC server arranges the speech request of user 1 in the first place, the speech request of user 2 in the second place, the speech request of user 3 in the third place, and doesn't accept the speech request of user 4 due to its listening priority.

S4. After the sorting, the PoC server permits user 1 in the first place in the queue to speak, and permits user 2, user 3, and user 4 to listen to the speech.

S5. After the speech of user 1 is completed, the PoC server logs the priority (high priority) and duration (e.g., 5 min) of this speech.

If user 4 disagrees to the speech of user 1 and decides to make comment as early as possible, he/she can modify his/her speech priority to high, and re-initiate a speech request. When the PoC server receives that request, it resorts the requests; first, the PoC server detects the speech priority of user 4 is high upon the speech request of user 4 and positions that request before the speech request of user 3; next, the PoC server detects the time user 4 initiated his/her speech request is before the time user 2 initiates his/her speech request, and positions the request of user 4 after the request of user 2.

The PoC server permits user 2 to speak and logs the charging and priority information after the speech.

The PoC server permits user 4 and user 3 to speak in sequence and logs the corresponding charging and priority information after the speeches.

S6. After the entire session is completed, the PoC server uploads the recorded charging and priority information for each speech to the charging system.

S7. The charging system calculates the charge for each speech in accordance with the logged charging information and charging rule; for example, the charging rule may be: 1 Yuan per minute. For example, the charge for the first speech of user 1 is 5*1=5 Yuan.

The charging rate for each speech priority is defined in the charging rule. For example, the charging rate is 50% for high priority and 20% for normal priority. After the charge for each speech is calculated, it is multiplied by the charging rate for the corresponding priority to get the priority charge; for example, the priority charge for the first speech of user 1 is 5*50%=2.5 Yuan; the priority charge for the first speech of user 3 is 20% of his speech charge. If a user speaks for more than one time in the session, the speech charge and the corresponding priority charge for his every speech are calculated respectively. Next, the speech charge and the corresponding priority charge for each speech are accumulated for each user, to get the charge payable by the user.

Or, the charging rate for each speech priority is defined in the charging rule. For example, the charging rate is 150% for high priority and 120% for normal priority. After the charge for each speech is calculated, it is multiplied by the charging rate for the priority to get the charge payable for the speech; for example, the charge payable for the first speech of user 1 is 5*150%=7.5 Yuan; the charge payable for the first speech of user 3 is his/her speech charge * 120%. If a user speaks for more than one time in the session, the charge payable for his/her every speech is calculated respectively. Next, the charges payable for the speech activities are accumulated for each user, to get the charge payable by the user.

Or, the charging rate corresponding to each speech priority and a basic priority charge are defined in the charging rule; for example, the basic priority charge is set to 1 Yuan, the charging rate for high priority is 3 times of the basic priority charge, i.e., 3 Yuan. The charge (5 Yuan) for the first speech of user 1 is added with the priority charge (1*3=3 Yuan) for the speech, to get the charge payable for the speech, i.e., 8 Yuan.

The calculation method for speech charge is not limited to those described above, and may be determined by the operator; the charging rate for priority may be in any other form; and the calculation method of charge payable by user includes, but not limited to the above methods.

In the embodiments of the present invention, when the charge payable is calculated for a user, the logged speech priority is taken account into the charge payable, that is, a charging rate is set for each priority; the higher the priority is, the higher the charging rate is. In this way, the embodiments of the present invention prevent the problem that the user increases his/her speech priority blindly to get the speech chance as early as possible and thereby causes the priority policy loses its practical significance.

It is apparent that those skilled in the art may make various modifications and variations to the present invention, without departing from the spirit and scope of the present invention. Thus, the present invention is intended to cover those modifications and variations if they fall into the protected domain defined by the claims of the present invention or the equivalent technical scope.

## Claims

1. A charging method in Push to talk over Cellular (PoC) service, comprising:
after a speech of a user in a session, logging charging information and a speech priority of the user by the PoC server;
uploading the charging information and the speech priority to a charging system by the PoC server;
charging the user in accordance with the charging information and a charging rate corresponding to the speech priority by the charging system.

2. The charging method in PoC service according to claim 1, wherein the process of charging the user in accordance with the charging information and a charging rate corresponding to the speech priority comprises:
- calculating a speech charge for the speech in accordance with the charging information;
- calculating a priority charge in accordance with the speech charge and the charging rate corresponding to the speech priority;
- adding the speech charge and the priority charge, to obtain a charge payable for the speech.

3. The charging method in PoC service according to claim 1, wherein the process of charging the user in accordance with the charging information and a charging rate corresponding to the speech priority comprises:
- calculating a speech charge for the speech in accordance with the charging information;
- multiplying the speech charge with the charging rate corresponding to the speech priority, to obtain a charge payable for the speech.

4. The charging method in PoC service according to claim 1, wherein the process of charging the user in accordance with the charging information and a charging rate corresponding to the speech priority comprises:
calculating a speech charge for the speech in accordance with the charging information;
- calculating a priority charge in accordance with the speech priority and the charging rate corresponding to the speech priority;
- adding the speech charge and the priority charge, to obtain a charge payable for the speech.

5. The charging method in PoC service according to any one of claims 1-4, wherein the speech priority is set by the user.

6. The charging method in PoC service according to claim 5, further comprising: setting, by the user, the speech priority before the session starts, or modifing the speech priority at a non_speech status.

7. The charging method in PoC service according to any one of claims 1-4, wherein the speech priority is set automatically according to a system default value.

8. The charging method in PoC service according to claim 7, wherein the system default value is the speech priority set by the user at the user's last speech.
